# EUROPEAN PATENT APPLICATION

(11) **EP 1 505 704 A2**
(43) Date of publication of application: **09.02.2005**
(21) Application number: 04014816.5
(22) Date of filing: 24.06.2004
(51) Int. Cl.: H02G 3/08

(54) **Inspection box, made from plastics material, particularly for containing connections to electrical, telephone, water or gas services for buildings**

(30) Priority: 21.07.2003 IT BO20030082
(71) Applicant: EUR.EX S.r.l., 47899 Serravalle (SM)
(72) Inventor: Santi, Emiliano, 47899 Serravalle (SM)
(74) Representative: Porsia, Attilio, Dr.

(57) **Abstract**

The invention relates to an inspection box, made from plastics material, in the shape of a parallelepiped, particularly for containing connections to electrical, telephone, water or gas services for buildings. The box in question can be packed, stored and sold in a condition of reduced overall dimensions, with the side walls (17, 17', 18, 18') detached from each other and superimposed on the frame (T) with the door (S) and the end wall (19) also detached from the side walls and superimposed on the preceding assembly. The box can be assembled easily by the user and for this purpose the frame with the door is provided on its perimeter with sockets (Z) open to the rear and suitably distributed, into which can be snap-fitted corresponding appendages (22) formed in one piece with one edge of each of the said side walls, which carry, on the edges opposite the edges used for fixing to the said frame with the door, further appendages (24) for interacting with a snap fit with corresponding perimetric sockets (25) provided in the rear wall (19) of the box.

## Description

The present invention relates to an inspection box, made from plastics material, particularly suitable for containing connections to electrical, telephone, water or gas services for buildings. The box according to the invention is distinguished from known boxes in that it can be packed, stored and sold in a condition of reduced overall dimensions, with the side walls detached from each other and superimposed on the frame with the door and with the end wall also detached from the side walls and superimposed on the preceding assembly. The frame with the door is preferably of the type described in the Italian patent application no. BO2002U-8 of 12 September 2002 in the name of the present applicant. The box in question can be assembled easily by the user at the time of installation, the frame with the door being provided for this purpose with sockets open to the rear and suitably distributed over the whole perimeter, in which can be snap-fitted, in place of the preceding hooks for fixing to the masonry, corresponding appendages provided on the side walls, which carry references for correct mutual positioning, and which carry, on the edges opposite the edges used for fixing to the said frame with the door, appendages in the form of double hooks for interacting with a snap fit with corresponding perimetric sockets in the rear wall, which is provided with a small projecting perimetric border which interacts with the corresponding rear edges of the side walls and has functions of containment.

Further characteristics of the invention, and the advantages derived therefrom, will be made clearer by the following description, provided with reference to the figures on the four attached sheets of drawings, in which:
- Fig. 1 is a front elevation from the inside of the frame with part of the door forming part of the inspection box in question and as described in the patent application cited above;

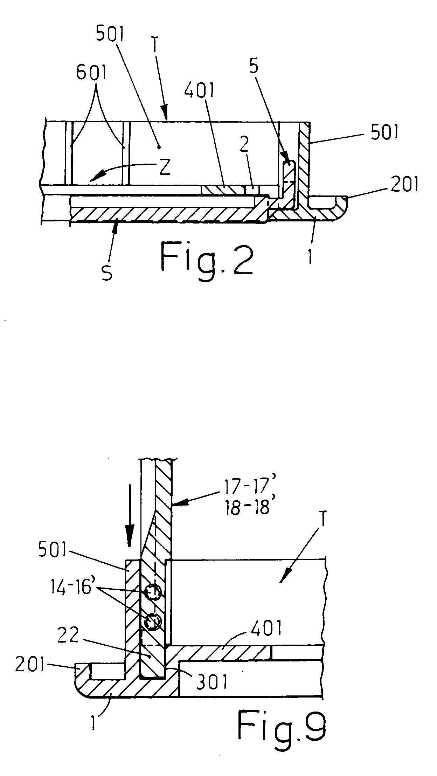

- Fig. 2 shows details of the assembly of Figure 1, viewed at the position of one of the hinges, in a cross section as indicated by II-II;
- Fig. 3 is a perspective view of the box with the various components exploded but in the same relative positions as those which these components have in the stage of packaging the said box;
- Figs. 4 and 5 are front elevations from the outside of the side walls of the box;

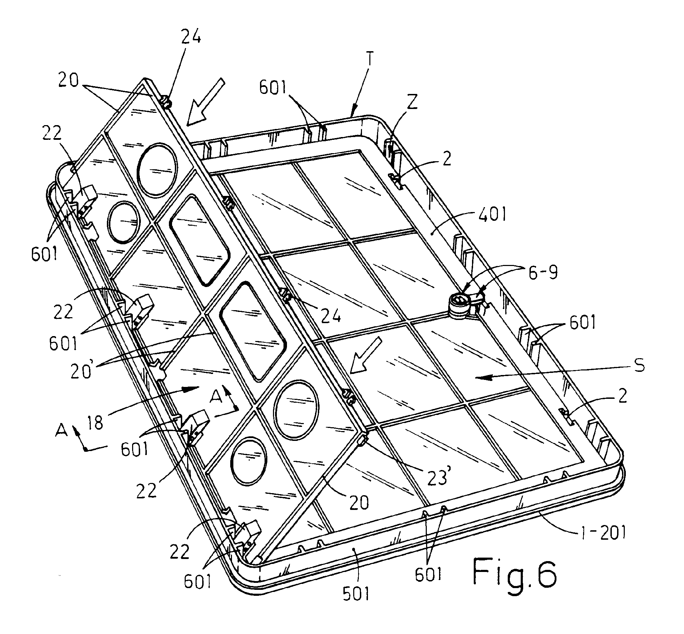

- Fig. 6 is a perspective view of the first stage of fitting one of the side walls of the box on to the frame of the door;
- Figs. 7, 8 and 9 show, in the section indicated by A-A in Figure 6, the successive stages of fitting one of the side walls of the box;
- Fig. 10 is a perspective view of the box with the four side walls fitted on the frame with the door, and in the stage of fitting the rear wall;
- Fig. 11 is a perspective view of the details of the rear wall of the box assembled and ready for use, in a section taken through XI-XI in Figure 10, at the position of one of the snap-fitting hooks used for this fitting;
- Fig. 12 is a perspective view of the corner detail of the side walls of the box shown in Figures 4 and 5, indicated by K.

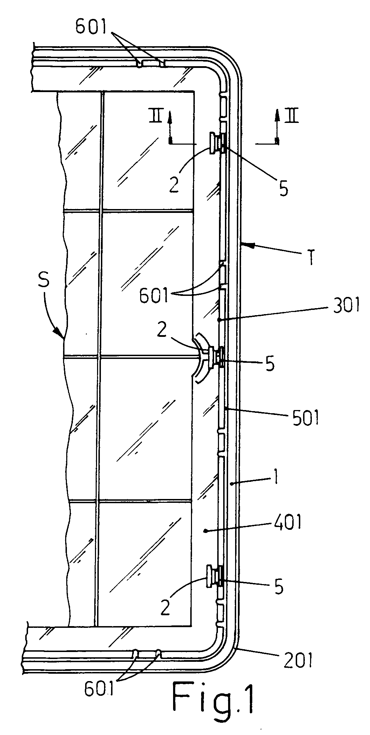

In Figure 1, the letter S indicates part of the door, which is provided, on the edge opposite that provided with the bolt locking means 6-9, with integral perpendicular appendages 5, in a suitable quantity and in a symmetrical arrangement, which are substantially T-shaped in side view and whose heads can be inserted into the wide ends of slots 2 which are also T-shaped and which are formed in at least one side of the border of the rectangular frame T on which the door lies in the closed position, orientated with their shanks perpendicular and pointing towards the outside of the said frame, in such a way that, when the door is position to close the said frame T, the wide parts of the appendages of the door are positioned under the shanks of the said slots, thus securing the fixing of the said door to the frame, while allowing the door to be hinged and to be removed easily by a voluntary operation which places the wide parts of the said appendages 5 in alignment with the wide parts of the said slots 2 and then removes the door in a direction approximately parallel to the frame T. The aforesaid slots 2 are located in at least two opposite sides or an all four sides of the frame T, in such a way that the door S can be hinged on any desired side of the said frame T. The door and the frame are formed by injection moulding of any suitable plastics material, including composite material and/or material containing inert fillers. The frame T comprises a main external border 1 having a curved rim 201 projecting from the rear face of the said border, which is provided with a rear perpendicular projecting edge 501 which forms an annular and continuous band which enters the void to be covered and which, in the previously cited patent application, was provided with means for fixing to this void. The inner perimeter of the said main border has a projecting edge 301 fixed perpendicularly on the inner face of the said border and fixed to an inner or secondary border 401, parallel to the main outer border, on which the door S bears when in the closed position. The annular inner strip 501 of the frame T is provided with sockets Z into which, in the prior patent application, it was possible to snap-fit hooks, also made from suitable plastics material and supplied with the assembly in question to enable it to be fixed to masonry. In greater detail, the aforesaid sockets Z are formed by the appropriate number of pairs of parallel fixed ribs 601, which are appropriately distributed transversely on the inner face of the inner annular strip 501 of the frame T, and which extend to contact the secondary border 401, these ribs having rounded vertical edges and having opposing recessed impressions 14 on their inner faces, designed to interact by snap-fitting with corresponding opposing projecting impressions provided on the sides of the shanks of the said hooks when these shanks are inserted into the sockets Z formed by the said pairs of ribs 601, by a combined operation of tilting and pushing, so that the said shanks enter the channels between the said strip 501 and the edge 301 which links the main border 1 to the secondary border 401 of the frame T.

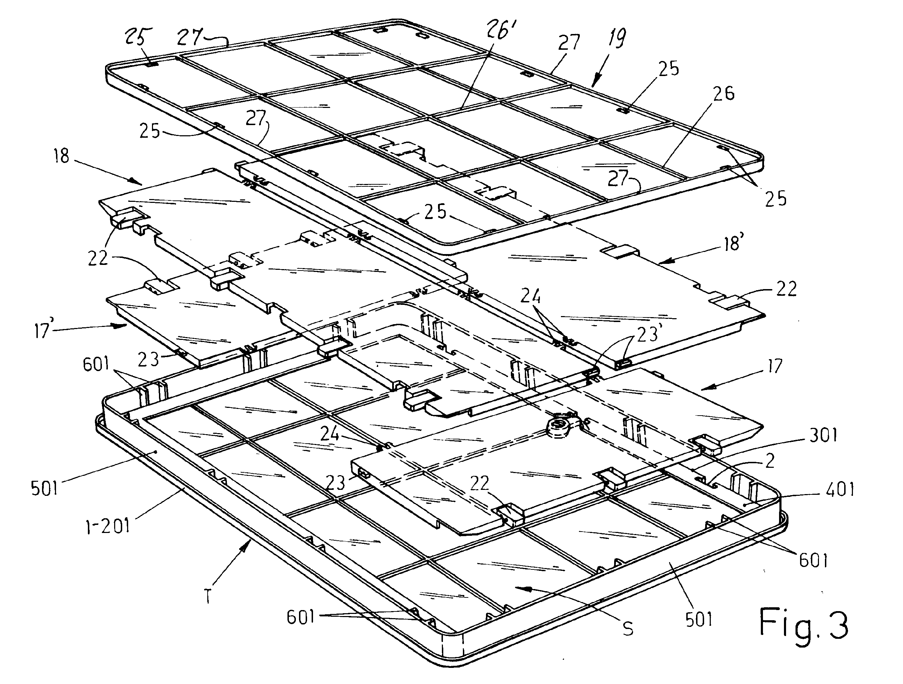

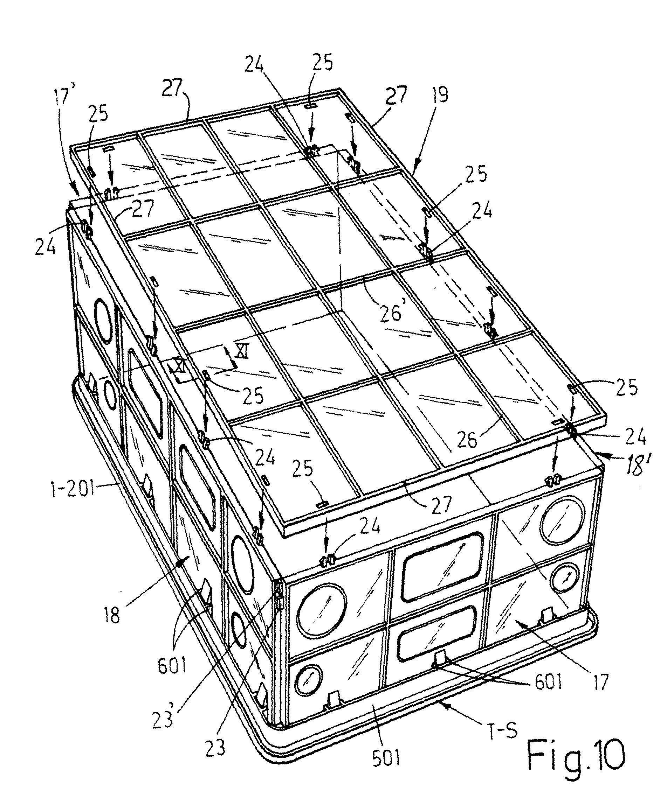

According to the invention, the said hook fixing sockets Z are to be used to enable corresponding side walls 17, 17' and 18, 18' (Fig. 10) perpendicularly on the four sides of the frame T, these walls having any necessary means of interconnection on their edges perpendicular to the frame and having, on the other edges parallel to those for fixing to the frame, means, preferably of the quick type, for example snap-fitting means, for fixing to an end wall 19, in such a way as to form in combination a complete box which is fixed in the void in the masonry by means of its side walls which replace the preceding hooks, using systems which are described below. Figure 3 shows that the lengths of the side walls 17, 17' and 18, 18' are smaller than those of the corresponding sides of the annular strip 501 of the frame T, in such a way that the said walls can be supported and stacked in pairs on the inner face of the door S which closes the said frame, and can be locked within the said strip 501 by the end wall, in such a way as to form, with corresponding packaging of any suitable material, a package having very reduced overall dimensions, the thickness of which is substantially the sum of the thicknesses of the frame T and the end wall 19, thus providing the evident advantages of practicality and economy associated with this condition in the stages of storage and transport of the box in question.

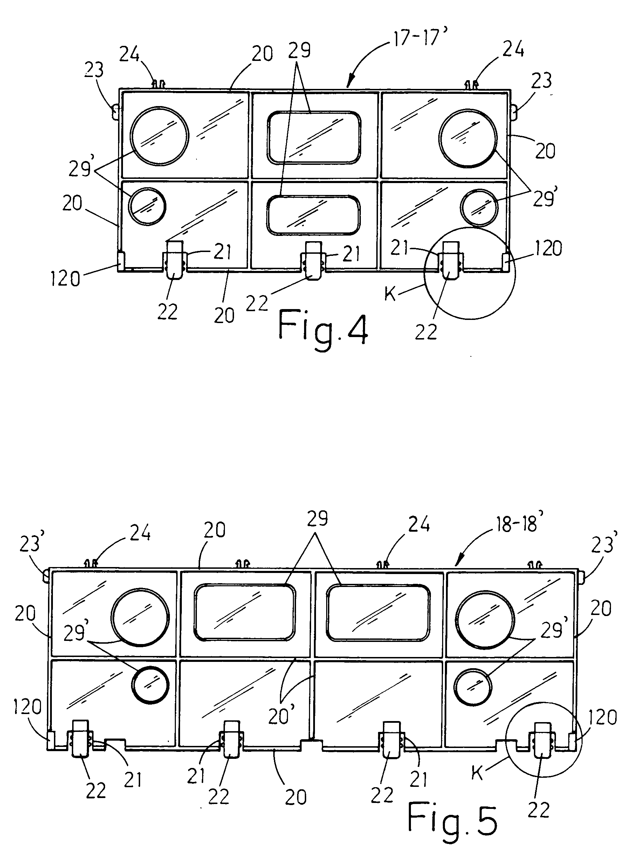

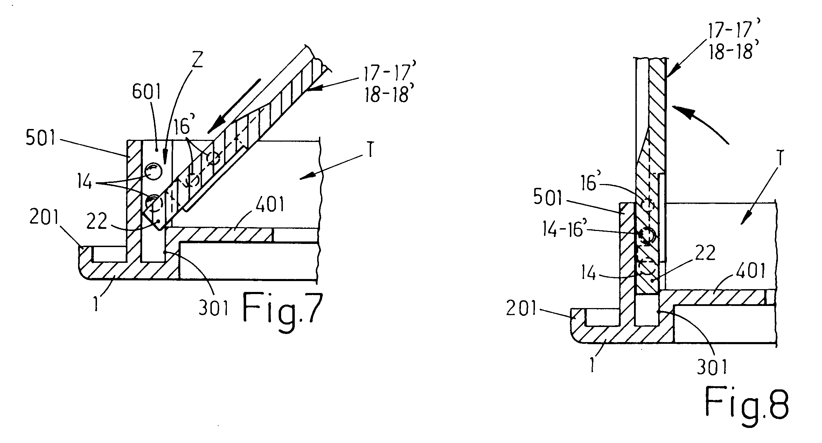

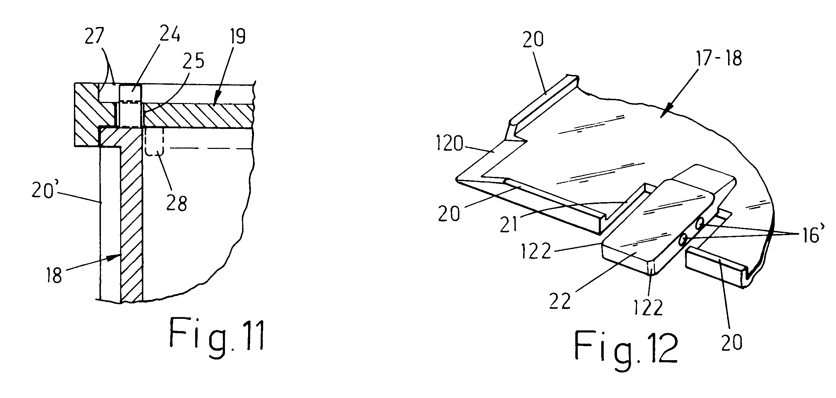

Figures 4 and 5 show that the side walls of the box are rectangular and are smooth on their faces directed towards the inside of the said box, but are provided on their outer faces with longitudinal and transverse projecting ribs 20 on their perimeters and 20' in intermediate positions, in order to impart sufficient rigidity to the said walls. To prevent interference with the curved corner area of the annular strip 501 of the frame T, the perimetric ribs 20 are briefly interrupted at the corner areas 120 angled at 45° by means of which the said walls are to be inserted into the said annular strip 501. On their edges of greater length which enter the annular strip 501 of the frame T, the side walls are provided with re-entrant slots 21, the number, arrangement and size of which are sufficient to enable them to house internally the pairs of parallel ribs 601 which help to form the sockets Z for fixing the preceding hooks for fixing the frame T in place. As also shown in the details of Figures 7 and 12, the slots 21 are partially occupied in a longitudinal and centred way by flat rectangular appendages 22, with the corner areas 122 of their ends suitably rounded, the width of these appendages being slightly less than the internal distance between the said pairs of parallel ribs 601, such that the appendages project from the edge of the wall with a portion of appropriate length and are provided on their sides with pairs of projections 16' in the form of spherical domes which are complementary in shape and mutual spacing to the impressions 14 provided on the inner sides of the said ribs 601. The outer faces of the appendages 22 lie on the same theoretical plane as that containing the outer faces of the ribs 20, 20' of the walls in question. To fit the side walls of the box, each wall is positioned with the ribs 20, 20' facing outward' and the ends of the appendages 22 are aimed towards the bases of the corresponding sockets Z formed by each pair of ribs 601, in a position inclined with respect to these ribs, as shown in Figure 7. As shown in the sequence of Figures 8 and 9, the side wall is then tilted outwards and is then pushed against the frame T, in such a way that the appendages 22 are inserted fully into the corresponding sockets formed by the pairs of ribs 601, where they remain trapped by the action of containment exerted by the said ribs 601, by the insertion into the channel formed by the strip 501 and by the edge 301, and also by the coupling of the projections 16' with the recesses 14. As provided previously for the hooks, each of the appendages 22 can also be provided transversely, at its end for example, with a small catch designed to snap-fit into a corresponding recessed impression provided in the inner face of the strip 501 or the edge 301, the whole arrangement being understandable to, and easily implemented by, those skilled in the art. When a side wall of the box has been fitted, the appendages 22 and the ribs 20, 20' contact the inner face of the strip 501 of the frame T. When all the side walls of the box have been fixed to the frame T, the consecutive ends of the said side walls are positioned at right-angles to each other and bear on each other with flat appendages 23, 23', as shown in Figure 10, in such a way that the said walls are correctly positioned with respect to each other, at right angles and in contact, even in their parts farthest from the frame T. Clearly, the appendages 23, 23' can be configured in other ways, in shapes such that they interlock with each other, by being L-shaped for example, in such a way that they are coupled to each other, with the evident advantages yielded by this arrangement. The side walls which are fitted first have their said L-shaped appendages opening upwards, while the side walls which are fitted last, for example the shorter ones, have their said L-shaped appendages opening downwards, in such a way that, when these walls are pushed downwards as shown in the sequence of Figures 8 and 9, the L-shaped appendages of these walls are coupled to those of the side walls already in position, thus locking and stabilizing the said walls against the action of both centripetal and centrifugal forces. Figures 4, 10 and 11 show that the side walls 17, 17', 18, 18' of the box are provided, on the edges opposite those provided with the appendages 22 for locking to the frame T, with sufficiently flexible appendages 24, in the form of double hooks and made in one piece with the walls, which can be snap-fitted into corresponding perimetric slots 25 of the end wall 19 when this is placed on the said side walls and is pushed on to them. The face of the end wall 19 directed towards the inside of the box is preferably smooth, while its outer face is provided with a grid of projecting ribs 26, 26', which stiffen it together with a perimetric border 27 which projects from both faces of the wall in question and which, as shown in the detail in Figure 11, surrounds the side walls of the box. In the said Figure 11, the number 28 indicates possible small projecting appendages, shown in broken lines, which are placed in the corner area of the rear wall 19, and can perform one or both of the following functions: they can support the side walls internally during assembly, and they can interact with the corner areas of the perimetric strip 501 of the frame T when the box is in the condition of reduced overall dimensions as shown in Figure 3, in such a way as to centre the wall 19 correctly with respect to the said frame.

The side walls, and if necessary also the end wall, can have suitably distributed weakened areas, of polygonal or rounded shape 29, 29' for example, or of any other suitable shape, which can, for example, be removed easily with a cutter or other tool, to permit the passage of cables and/or pipes of the installation connected to the inspection box in question.

The box designed in this way can be fixed in place by means of mortar, adhesives or glue, using the adhesion provided by the ribbed outer faces of the side walls and the end wall, or can be fixed with expanding plugs fitted on the said side walls and/or on the end wall and/or by means of holes formed and provided if necessary in the of the joint between the appendages 22 and the annular strip 501 of the frame T, the whole arrangement being understandable to, and easily implemented by, those skilled in the art. It is to be understood that the description refers to a preferred embodiment of the invention, which may be varied and modified in numerous ways, particularly as regards construction, without departure from the limits of protection of the present invention.

## Claims

1. Inspection box, made from plastics material, in the shape of a parallelepiped, particularly for containing connections to electrical, telephone, water or gas services for buildings, **characterized in that** it can be packed, stored and sold in a condition of reduced overall dimensions, with the side walls (17, 17', 18, 18') detached from each other and superimposed on the frame (T) with the door (S) closed and with the end or rear wall (19) also detached from the side walls and superimposed on the preceding assembly, the frame with the door being provided on its perimeter with sockets (Z) open to the rear and suitably distributed, into which can be snap-fitted corresponding appendages (22) formed in one piece with one edge of each of the said side walls, which carry, on the edges opposite the edges used for fixing to the said frame with the door, further appendages (24) for interacting with a snap fit with corresponding perimetric sockets (25) provided in the rear wall (19) of the box.

2. Inspection box according to Claim 1, in which the frame (T) with the door (S) is preferably of the type described in patent application no. BO2002U-8 of 12 September 2002 in the name of the present applicant.

3. Inspection box according to Claim 1, in which the lengths of the side walls (17, 17', 18, 18') are smaller than those of the corresponding sides of the inner annular strip (501) of the frame (T) with the door (S), so that they can be stacked inside this strip when the box is packaged in the condition of reduced overall dimensions, to form a package whose thickness is no more than the sum of the thicknesses of the said frame (T) and the end wall (19).

4. Inspection box according to Claim 1, in which the side walls (17, 17', 18, 18') and the end wall (19) are smooth on their faces directed towards the inside of the said box but are provided on their outer faces with longitudinal and transverse projecting ribs on their perimeters (20, 27) and in intermediate positions (20', 26, 26'), in order to impart sufficient rigidity and robustness to the said walls.

5. Inspection box according to Claim 4, in which the perimetric rib (27) of the rear wall (19) is such that it projects from both faces of the said wall, so that, when this wall is fitted in place, part of the said rib (27) surrounds the side walls of the said box.

6. Inspection box according to Claim 1, in which the side walls (17, 17', 18, 18') and if necessary also the end wall (19) can be provided with weakened areas (29, 29'), for example areas of polygonal, round and/or any other suitable shape, which can, for example, be removed easily with a cutter or other tool, to permit the passage of cables and/or pipes of the installation connected to the inspection box in question.

7. Inspection box according to Claim 3, in which, in order to prevent interference with the curved corner area of the annular strip (501) of the frame (T), the perimetric ribs (20) of the side walls (17, 17', 18, 18') are briefly interrupted at the corner areas (120) angled at 45°, by means of which the said walls are inserted into the said annular strip (501) during the assembly of the box.

8. Inspection box according to Claim 1, **characterized in that**, on their edges of greater length which are designed to enter the inner perimetric strip (501) of the frame (T) with the door, the side walls (17, 17', 18, 18') are provided with re-entrant slots (21), the number, arrangement and size of which are sufficient to enable them to house internally the pairs of parallel ribs (601) which help to form the sockets (Z) for fixing the preceding hooks for fixing the frame (T) in place, these slots being partially occupied in a longitudinal and centred way by flat rectangular appendages (22), with the corner areas (122) of their ends suitably rounded, the width of these appendages being slightly less than the internal distance between the said pairs of parallel ribs (601), such that the appendages project from the edge of the wall with a portion of appropriate length and are provided on their sides with pairs of projections (16'), in the form of spherical domes for example, which are complementary in shape and mutual spacing to the impressions (14) provided on the inner sides of the said ribs (601).

9. Inspection box according to Claim 8, in which the outer faces of the appendages (22) for fixing the side walls (17, 17', 18, 18') lie on the same theoretical plane as that containing the outer faces of the ribs (20, 20') of the said side walls.

10. Inspection box according to the preceding claims, **characterized in that** the side walls (17, 17', 18, 18') are provided in their vertical edges with appendages (23, 23') with which each wall bears laterally on the next wall, to ensure a correct arrangement of the said side walls at right angles to each other.

11. Inspection box according to Claim 10, in which the said appendages (23, 23') can be shaped differently with a shape such that they interlock with each other.

12. Inspection box according to Claim 11, in which the said appendages (23, 23') are for example L-shaped, so that they lock into each other, the side walls which are fitted first being made to have their said L-shaped appendages opening upwards, while the side walls which are fitted last, for example the shorter ones, have their said L-shaped appendages opening downwards, in such a way that, when the latter walls are pushed downwards, the L-shaped appendages of these walls are coupled to those of the side walls already in position, thus locking and stabilizing the said walls against the action of both centripetal and centrifugal forces.

13. Inspection box according to the preceding claims, in which the side walls (17, 17', 18, 18') of the box are provided, on the edges opposite those provided with the appendages (22) for coupling to the frame (T) with the door, with sufficiently flexible appendages (24), in the shape of hooks or double hooks, made in piece with the walls and engaging with a snap fit in corresponding perimetric slots (25) in the end wall (19) when this is placed on the said side walls and pushed on to them.

14. Inspection box according to the preceding claims, **characterized in that** it can be fixed in place with mortar, adhesives or glue, using the adhesion provided by the outer ribbed surfaces of its side walls and/or the end wall, or **in that** it can be fixed by any other suitable means, for example with expansion plugs which pass through holes formed in the said side walls and/or end wall, or in the areas of the joint between the appendages (22) and the perimetric strip (501) of the frame (T).
